# EUROPÄISCHE PATENTSCHRIFT

(11) **EP 1 864 887 B1**
(45) Veröffentlichungstag und Bekanntmachung des Hinweises auf die Patenterteilung: **11.08.2010**
(21) Anmeldenummer: 07009483.4
(22) Anmeldetag: 11.05.2007
(51) Int. Cl.: B62D 7/18

(54) **Einzelradaufhängung für ein lenkbares Rad**
Independent wheel suspension for a steerable wheel
Suspension indépendante pour une roue orientable

(30) Priorität: 09.06.2006 DE 102006026863
(43) Veröffentlichungstag der Anmeldung: 12.12.2007
(73) Patentinhaber: Dr. Ing. h.c. F. Porsche AG, 70435 Stuttgart (DE)
(72) Erfinder: Munzert, Andreas, 70193 Stuttgart (DE); Wahl, Georg, 75181 Pforzheim (DE); Schote, Norbert, 72119 Ammerbuch (DE)

(56) Entgegenhaltungen:
- EP-A- 1 319 533
- EP-A- 1 479 541
- WO-A-01/81153
- DE-A1- 3 906 501

## Beschreibung

Die vorliegende Erfindung betrifft eine Einzelradaufhängung für ein lenkbares Rad, bei welchem das Rad mit einem als Schwenklager ausgebildeten Radträger verbunden ist, gemäß dem Oberbegriff des Anspruchs 1.

Aus der DE 100 61 407 A1 ist eine derartige Einzelradaufhängung für ein gefedertes, lenkbares Rad bekannt, bei welchem das Rad mit einem Achsschenkelträger in Verbindung steht, der über einen oberen Querlenker und einen unteren Querlenker mit einem Fahrzeugchassis und mit einem Lenkhebel verbunden ist. Der Lenkhebel steht mit einer Spurstange in Verbindung ebenso wie mit einem Stoßdämpfer und einer Feder. Dabei ist der obere Querlenker über ein Kugelgelenk oder ein Molekulargelenk und der untere Querlenker über ein Drehgelenk mit dem Achsschenkelträger verbunden, wobei der untere Querlenker auf Höhe des Lenkhebels und der Spurstange angeordnet ist. Durch das Kugelgelenk am oberen Querlenker kann der obere Querlenker weit in Richtung Fahrzeugaußenseite geschoben werden, so dass zwischen den oberen Querlenkern ausreichender Freiraum für Motor und Mittelgang geschaffen wird und der obere Querlenker gleichzeitig eine ausreichende Länge aufweist, so dass der Federweg nicht verringert wird.

Aus der US 5,366,233 ist eine weitere Einzelradaufhängung bekannt.

Die DE 39 06 501 A1 beschreibt ein Aufhängungssystem für ein Fahrzeug mit einer Radtraganordnung, die zum drehbaren Tragen eines lenkbaren Vorderrades vorgesehen ist, und die aus oberen und unteren Traggliedern besteht, wobei eine elastische Gelenkanordnung vorgesehen ist für die Verbindung des unteren Traggliedes mit dem oberen Tragglied, derart, dass das untere Tragglied mit dem oberen Tragglied lediglich über die elastsiche Gelenkanordnung in Eingriff steht, und so gebildet ist, dass sie in einer Fahrzeuglenkrichtung relativ flexibel und in einer Fahrzeugquerrichtung relativ starr ist, wobei eine oberes Gelenkglied mit einer Radspindel versehen ist, auf der ein lenkbares Vorderrad angebracht ist, und wobei ein Gelenkarm vorgesehen ist, der über ein Kugelgelenk mit einer Verbindungs- bzw. Spurstange verbunden ist.

Weiterhin beschreibt die EP 1 479 541 A1 eine Radführungsvorrichtung eines gelenkten Kraftfahrzeugrades, welche Radführungslenker und einen Achsschenkel aufweist, welche Achsschenkel eine Aufnahmevorrichtung für eine Radlagerung sowie Anbindungsstellen zur Lagerung von Lagerzapfen von mit den Radführungslenkern verbundenen Kugelgelenken aufweist.

Nachteilig bei den genannten Einzelradaufhängungen ist, dass eine Verbindung zwischen einer Lenkung, beispielsweise einem Lenkgetriebe und dem gelenkten Rad relativ starr ist, wodurch sich ein beeinträchtigtes Eigenlenkverhalten ergibt. Zur Verbesserung dieses Eigenlenkverhaltens ist es vorteilhaft, insbesondere die Verbindung zwischen Lenkung und gelenkten Rädern in gewisser Weise elastisch zu gestalten, wobei die Elastizität hierbei beispielsweise in der Aufhängung des Lenkgetriebes, in der Spurstange oder über elastisch ausgelegte Bauteile erzielt werden kann.

Die vorliegende Erfindung beschäftigt sich mit dem Problem, für eine Einzelradaufhängung der gattungsgemäßen Art eine verbesserte oder zumindest andere Ausführungsform anzugeben, welche ein verbessertes Eigenlenkverhalten aufweist.

Dieses Problem wird erfindungsgemäß durch den Gegenstand des unabhängigen Anspruches gelöst. Vorteilhafte Ausführungsformen sind Gegenstand der abhängigen Ansprüche.

Die vorliegende Erfindung beruht auf dem allgemeinen Gedanken, bei einer Einzelradaufhängung für ein lenkbares Rad einen Radträger und einen zugehörigen Lenkhebel derart miteinander zu kombinieren, dass der Lenkhebel eine kraftabhängige, insbesondere eine lenkkraftabhängige, Elastizität aufweist. Das Rad ist hierbei mit einem als Schwenklager ausgebildeten Radträger verbunden und weist einen fest am Radträger angeordneten Lenkhebel auf, der anderenends gelenkig mit einer Spurstange verbunden ist. Da der Lenkhebel im wesentlichen quer zur aufgebrachten Lenkkraft angeordnet ist, bestimmt dessen Länge ebenso wie dessen Materialeigenschaften dessen Elastizität. Bei außergewöhnlichen hohen Lasten, beispielsweise bei Missbrauchslastfällen, stützt sich der Lenkhebel in einem vordefinierten Kragabstand am Radträger ab, so dass einerseits ein Verbiegen bzw. Brechen des Lenkhebels vermieden werden kann und andererseits dessen Elastizität aufgrund der nach der Anlage an dem Radträger verringerten Kragarmlänge des Lenkhebels sprunghaft abnimmt. Durch die erfindungsgemäße Lösung wird somit das Eigenlenkverhalten bei einem normalen Fahrbetrieb durch die Elastizität des Lenkhebels positiv beeinflusst, wobei ein Verbiegen bzw. Abbrechen des Lenkhebels bei Missbrauchslastfällen wirkungsvoll vermieden werden kann. Die erforderliche Elastizität für ein positives Eigenlenkverhalten des Kraftfahrzeuges wird somit am Radträger erzeugt.

Erfindungsgemäß weist der Radträger im Bereich des Lenkhebels einen ersten und einen zweiten Arm auf, wobei der zweite Arm eine Durchgriffsöffnung besitzt und der Lenkhebel einenends fest mit dem ersten Arm verbunden ist und mit seinem anderen Ende die Durchgriffsöffnung im zweiten Arm berührungsfrei durchgreift. Hierdurch kann eine im Vergleich zu einer Anordnung des Lenkhebels am zweiten Arm verlängerte Längserstreckung des Lenkhebels und damit eine erhöhte Elastizität erreicht werden, wobei die Durchgriffsöffnung im zweiten Arm dazu dient, dass sich der im normalen Fahrbetrieb durch die Durchgriffsöffnung berührungsfrei erstreckende Lenkhebel bei Missbrauchslastfällen an einen Rand der Durchgriffsöffnung anlegt und dadurch die Kragarmlänge des Lenkhebels und dessen Elastizität reduziert wird. Durch eine derartige Ausbildung des Lenkhebels in Verbindung mit dem Radträger kann eine stufenweise Elastizität des Lenkhebels auf konstruktiv einfache Weise erreicht werden und zugleich ein Verbiegen bzw. Brechen des Lenkhebels bei zu hohen Lasten wirkungsvoll unterbunden werden.

Zweckmäßig weist die Durchgriffsöffnung Anschläge auf, an welchen der Lenkhebel bei Missbrauchslastfällen anliegt. Dabei können diese Anschläge aus Kunststoff ausgebildet sein oder ein Kunststoffelement tragen. Denkbar ist somit, dass die Anschläge entweder direkt, das heißt aus gleichem Material, an die Durchgriffsöffnung angeformt sind oder als nachträglich in der Durchgriffsöffnung angeordnetes Kunststoffelement ausgebildet sind. Bei aus Kunststoff ausgebildeten oder ein Kunststoffelement tragenden Anschlägen erfolgt der Elastizitätssprung des Lenkhebels beim Übergang vom normalen Fahrbetrieb zum Missbrauchslastfall deutlich weicher, wodurch ebenfalls das Eigenlenkverhalten des Kraftfahrzeuges verbessert werden kann.

Bei einer weiteren vorteilhaften Ausführungsform der erfindungsgemäßen Lösung sind der Radträger und der Lenkhebel entweder aus einem Stück hergestellt oder als separate Bauteile ausgebildet und anschließend zusammengebaut, insbesondere miteinander verschraubt oder verschweißt. Eine einteilige bzw. einstückige Ausbildung des Radträgers und des Lenkhebels bietet dabei den Vorteil, dass eine nachträgliche Montage des Lenkhebels am Radträger entfallen kann, wodurch die Fertigungskosten der Einzelradaufhängung reduziert werden können. Dem gegenüber besitzt eine Einzelradaufhängung mit einem als separate Bauteile ausgebildeten Radträger und einem Lenkhebel den Vorteil, dass diese aus unterschiedlichen Materialien und damit mit unterschiedlichen Steifigkeiten bzw. Elastizitäten ausgebildet sein können. Hierbei kann durch eine geeignete Materialwahl bzw. eine geeignete Längenwahl des Lenkhebels stärker Einfluss auf das gewünschte Eigenlenkverhalten genommen werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Einzelradaufhängung in perspektivischer Ansicht,
- Fig. 2: einen Radträger mit einem Lenkhebel,
- Fig. 3: einen Radträger und einen Lenkhebel im Bereich einer Durchgangsöffnung durch einen der beiden Arme des Radträgers.

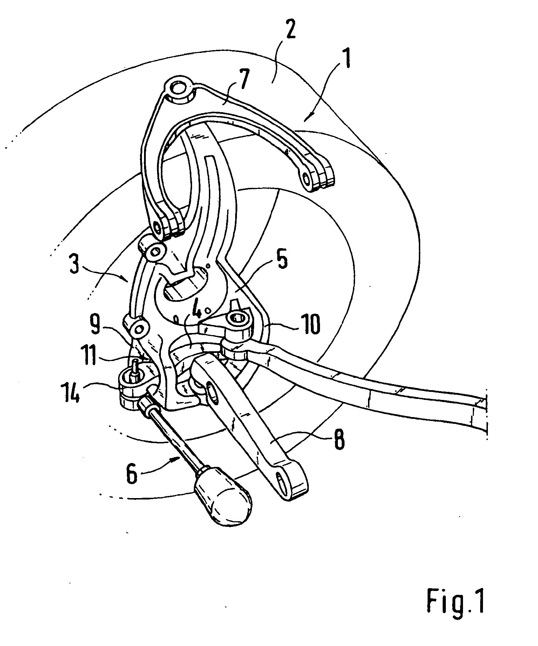

Entsprechend Fig. 1 weist eine Einzelradaufhängung 1 für ein lenkbares und nur teilweise dargestelltes Rad 2 einen Radträger 3 und einen fest damit verbundenen Lenkhebel 4 auf. Dabei ist der Radträger 3 vorzugsweise als Schwenklager ausgebildet und weist ein Achslager 5 zur Aufnahme einer Radachse auf. Der Lenkhebel 4 ist wie oben beschriebenen einenends fest mit dem Radträger 3 verbunden und anderenends gelenkig mit einer Spurstange 6 gekoppelt, welche beispielsweise an ein nicht dargestelltes Lenkgetriebe angeschlossen ist. An seinem oberen Ende weist der Radträger 3 einen gelenkig damit verbundenen oberen Querlenker 7 auf, wogegen er an seinem unteren Ende mit einem unteren Querlenker 8 verbunden ist. Erfindungsgemäß sind nun der Radträger 3 und der Lenkhebel 4 derart miteinander gekoppelt, dass der Lenkhebel 4 eine lastabhängige, insbesondere eine lenkkraftabhängige, Elastizität aufweist. Die auf den Lenkhebel 4 ausgeübte Kraft wird dabei von der Spurstange 6 übertragen und wirkt im wesentlichen quer zur Lenkhebellängserstreckung. Die erfindungsgemäße Kopplung des Lenkhebels 4 mit dem Radträger 3 soll nun im Folgenden näher beschrieben werden.

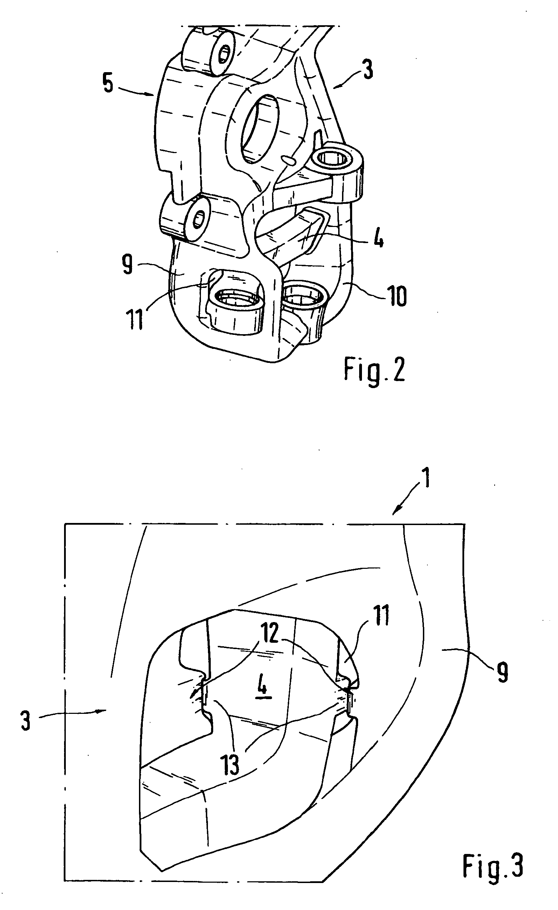

Unterhalb des Achslagers 5, das heißt im Bereich des Lenkhebels 4, weist der Radträger 3 einen ersten Arm 10 und eine zweiten Arm 9 auf, wobei im zweiten Arm 9 eine Durchgriffsöffnung 11 angeordnet ist (vgl. Fig. 2 und 3). Gemäß der Erfindung ist nun der Lenkhebel 4 einenends fest mit dem ersten Arm 10 des Radträgers 3 verbunden, während er mit seinem anderen Ende die Durchgriffsöffnung 11 im zweiten Arm 9 des Radträgers 3 berührungsfrei durchgreift. Die kraftabhängige Elastizität des Lenkhebels 4 wird auf folgende Weise erreicht. Bei normaler Fahrweise besitzt der Lenkhebel 4 eine Elastizität, die sich aus dessen Kragarmlänge und dessen Materialeigenschaften zusammensetzt. Bei hohen Lasten, insbesondere bei Missbrauchslastfällen, legt sich nun Lenkhebel 4 an einen Öffnungsrand der Durchgriffsöffnung 11 an, und verringert dadurch in erheblichen Maße seine Kragarmlänge, wodurch auch die Elastizität des Lenkhebels sich sprungartig verändert.

Die beiden Arme 9 und 10 bilden gemäß der Fig. 1 in Achsrichtung gesehen einen geschlossenen Ringquerschnitt, das heißt sie berühren sich im Bereich des Achslagers 5 und einem unteren Ende des Radträgers 3. Dabei ist der Lenkhebel 4 im wesentlichen quer zur Achsrichtung des Rades 2 angeordnet, und ein Abstand zwischen den beiden Armen 9 und 10 des Radträgers 3 vorzugsweise zumindest so groß wie ein Abstand vom Achslager 5 bis zum unteren Ende des Radträgers 3. Insbesondere der Abstand der beiden Arme 9 und 10 des Radträgers 3 beeinflussen dabei im besonderen Maße die Elastizität des Lenkhebels 4. Bei einem geringen Abstand zwischen den beiden Armen 9 und 10 des Radträgers 3 ist davon auszugehen, dass auch eine Längserstreckung des Lenkhebels 4 kürzer ausfällt und damit dessen Elastizität geringer ist, während bei einem großen Abstand zwischen den beiden Armen 9 und 10 des Radträgers 3 ein längerer Lenkhebel 4 zum Einsatz gelangt, so dass eine größere Elastizität des Lenkhebels 4 gegeben ist. Die Elastizität des Lenkhebels 4 wirkt sich dabei direkt auf ein Eigenlenkverhalten des Kraftfahrzeuges aus, so dass ein zu starres Ausbilden des Lenkhebels 4 ein beeinträchtiges Eigenlenkverhalten des Kraftfahrzeuges zur Folge hat.

Wie in Fig. 3 dargestellt weist die Durchgriffsöffnung 11 Anschläge 12 auf. Zusätzlich oder alternativ dazu kann vorgesehen sein, dass auch der Lenkhebel 4 im Bereich der Anschläge 12 Gegenanschläge 13 aufweist, welche beim Missbrauchslastfall an den Anschlägen 12 oder an einem Öffnungsrand der Durchgriffsöffnung 11 anliegen. Dabei können die Anschläge 12 und/oder die Gegenanschläge 13 aus Kunststoff ausgebildet sein oder ein nicht dargestelltes Kunststoffelement tragen. Denkbar ist auch, dass die Anschläge 12 und/oder die Gegenanschläge 13 einstückig mit dem Radträger 3 bzw. dem Lenkhebel 4 ausgebildet sind oder zusätzlich und nachträglich dort montiert werden. Eine einstückige Ausbildung der Anschläge 12 mit dem Radträger 3 bzw. der Gegenanschläge 13 mit dem Lenkhebel 4 verringert dabei zusätzliche, nachträgliche Montagekosten, wogegen ein aus Kunststoff ausgebildeter Anschlag 12 bzw. Gegenanschlag 13 den Sprung der Elastizität des Lenkhebels 4 vom normalen Fahrbetrieb zum Missbrauchslastfall deutlich weicher gestaltet.

Des weiteren können der Radträger 3 und der Lenkhebel 4 entweder aus einem Stück hergestellt sein, das heißt auch in einem Fertigungsgang gefertigt werden, oder als separate Bauteile ausgebildet sein, welche in einem späteren Montageprozess fest miteinander verbunden werden. Die einteilige Ausbildung bietet dabei den Vorteil, das ein nachträglicher Montageprozess des Lenkhebels 4 am Radträger 3 entfallen kann und dadurch die Fertigungskosten reduziert werden können, während bei als separaten Bauteil ausgebildetem Radträger 3 und Lenkhebel 4 insbesondere über die Materialeigenschaften des Lenkhebels 4 Einfluss auf dessen Elastizität genommen werden kann.

Schließlich ist noch zu bemerken, dass der Lenkhebel 4 vorzugsweise über ein Kugelgelenk 14 mit der Spurstange 6 verbunden ist, wodurch eine Momentenübertragung vom Lenkhebel 4 auf die Spurstange 6 und umgekehrt vermieden werden kann.

Zusammenfassend lassen sich die wesentlichen Merkmale der erfindungsgemäßen Lösung wie folgt charakterisieren:

Zur Verbesserung des Eigenlenkverhaltens eines Kraftfahrzeuges sieht die Erfindung eine Einzelradaufhängung 1 vor, bei welcher der Lenkhebel 4 derart mit dem Radträger 3 zusammenwirkt, dass sich eine kraftabhängig, insbesondere eine lenkkraftabhängige, Elastizität des Lenkhebels 4 ergibt. Dabei durchgreift der Lenkhebel 4 durch eine Durchgriffsöffnung 11 den zweiten Arm 9 des Radträgers 3 berührungsfrei, wodurch im normalen Fahrbetrieb die Elastizität des Lenkhebels 4 lediglich aus dessen Kragarmlänge und dessen Materialeigenschaften bestimmt wird. Bei Missbrauchslastfällen legt sich der Lenkhebel 4 an einen Öffnungsrand der Durchgriffsöffnung 11, vorzugsweise über Anschläge 12 bzw. Gegenanschläge 13 an und verringert dadurch seine freie Kragarmlänge und damit seine Elastizität.

## Patentansprüche

1. Einzelradaufhängung (1) für ein lenkbares Rad (2), bei welchem das Rad (2) mit einem als Schwenklager ausgebildeten Radträger (3) verbunden ist und wobei ein Lenkhebel (4) vorgesehen ist, der einerseits fest mit dem Radträger (3) und andererseits gelenkig mit einer Spurstange (6) verbunden ist, wobei der Radträger (3) und der Lenkhebel (4) derart zusammenwirken, dass der Lenkhebel (4) eine kraftabhängige Elastizität aufweist, **dadurch gekennzeichnet, dass** der Radträger (3) im Bereich des Lenkhebels (4) einen ersten und einen zweiten Arm (9) aufweist, dass der zweite Arm (9) eine Durchgriffsöffnung (11) aufweist, dass der Lenkhebel (4) fest mit dem ersten Arm (10) des Radträgers (3) verbunden ist und die Durchgriffsöffnung (11) im zweiten Arm des Radträgers (3) berührungsfrei durchgreift.

2. Einzelradaufhängung nach Anspruch 1, **dadurch gekennzeichnet, dass** die beiden Arme (9, 10) in Achsrichtung gesehen einen geschlossenen Ringquerschnitt bilden.

3. Einzelradaufhängung nach Anspruch 1 oder 2, **dadurch gekennzeichnet, dass** der Lenkhebel (4) im wesentlichen quer zur Achsrichtung des Rades (2) angeordnet ist.

4. Einzelradaufhängung nach einem der Ansprüche 1 bis 3, **dadurch gekennzeichnet, dass** die Durchgriffsöffnung (11) Anschläge (12) aufweist, an welchen der Lenkhebel (4) bei Missbrauchslastfällen anliegt.

5. Einzelradaufhängung nach Anspruch 4, **dadurch gekennzeichnet, dass** der Lenkhebel (4) im Bereich der Anschläge (12) Gegenanschläge (13) aufweist.

6. Einzelradaufhängung nach einem der Ansprüche 4 oder 5, **dadurch gekennzeichnet, dass** die Anschläge (12) und/oder die Gegenanschläge (13) aus Kunststoff ausgebildet sind oder ein Kunststoffelement tragen.

7. Einzelradaufhängung nach einem der Ansprüche 1 bis 6, **dadurch gekennzeichnet, dass** der Radträger (3) und der Lenkhebel (4) aus einem Stück hergestellt sind, oder dass der Radträger (3) und der Lenkhebel (4) als separate Bauteile ausgebildet und zusammengebaut sind.

8. Einzelradaufhängung nach einem der Ansprüche 1 bis 7, **dadurch gekennzeichnet, dass** der Lenkhebel (4) über ein Kugelgelenk (14) mit der Spurstange (6) verbunden ist.

9. Einzelradaufhängung nach einem der Ansprüche 1 bis 8, **dadurch gekennzeichnet, dass** ein Abstand zwischen den beiden Armen (9, 10) des Radträgers (3) zumindest so groß ist wie ein Abstand von einem Achslager (5) bis zu einem unteren Ende des Radträgers (3).

## Claims

1. Independent wheel suspension (1) for a steerable wheel (2), in which the wheel (2) is connected to a wheel carrier (3) designed as a pivot bearing and with a steering lever (4) being provided which is fixedly connected at one side to the wheel carrier (3) and articulatedly connected at the other side to a track rod (6), with the wheel carrier (3) and the steering lever (4) interacting in such a way that the steering lever (4) has a force-dependent elasticity, **characterized in that** the wheel carrier (3) has a first and a second arm (9) in the region of the steering lever (4), **in that** the second arm (9) has a passage opening (11), **in that** the steering lever (4) is fixedly connected to the first arm (10) of the wheel carrier (3) and extends through the passage opening (11) in the second arm of the wheel carrier (3) without contact.

2. Independent wheel suspension according to Claim 1, **characterized in that** the two arms (9, 10) form a closed annular cross section as viewed in the axial direction.

3. Independent wheel suspension according to Claim 1 or 2, **characterized in that** the steering lever (4) is arranged substantially transversely with respect to the axial direction of the wheel (2).

4. Independent wheel suspension according to one of Claims 1 to 3, **characterized in that** the passage opening (11) has stops (12) against which the steering lever (4) bears in misuse load situations.

5. Independent wheel suspension according to Claim 4, **characterized in that** the steering lever (4) has counterpart stops (13) in the region of the stops (12).

6. Independent wheel suspension according to one of Claims 4 or 5, **characterized in that** the stops (12) and/or the counterpart stops (13) are formed from plastic or bear a plastic element.

7. Independent wheel suspension according to one of Claims 1 to 6, **characterized in that** the wheel carrier (3) and the steering lever (4) are produced from one piece or **in that** the wheel carrier (3) and the steering lever (4) are formed as separate components and are assembled.

8. Independent wheel suspension according to one of Claims 1 to 7, **characterized in that** the steering lever (4) is connected to the track rod (6) by means of a ball joint (14).

9. Independent wheel suspension according to one of Claims 1 to 8, **characterized in that** a spacing between the two arms (9, 10) of the wheel carrier (3) is at least as large as a spacing from an axle bearing (5) to a lower end of the wheel carrier (3).

## Revendications

1. Suspension de roue indépendante (1) pour une roue orientable (2), la roue (2) étant connectée à un support de roue (3) réalisé sous forme de palier pivotant et un levier de direction (4) étant prévu, lequel est connecté d'une part fixement au support de roue (3) et d'autre part de manière articulée à une barre d'accouplement (6), le support de roue (3) et le levier de direction (4) coopérant de telle sorte que le levier de direction (4) présente une élasticité dépendant de la force, **caractérisée en ce que** le support de roue (3) présente dans la région du levier de direction (4) un premier et un deuxième bras (9), **en ce que** le deuxième bras (9) présente une ouverture d'engagement (11), **en ce que** le levier de direction (4) est connecté fixement au premier bras (10) du support de roue (3) et vient en prise sans contact à travers l'ouverture d'engagement (11) dans le deuxième bras du support de roue (3).

2. Suspension de roue indépendante selon la revendication 1, **caractérisée en ce que** les deux bras (9, 10) forment une section transversale annulaire fermée, vue dans le sens axial.

3. Suspension de roue indépendante selon la revendication 1 ou 2, **caractérisée en ce que** le levier de direction (4) est disposé essentiellement transversalement à la direction axiale de la roue (2).

4. Suspension de roue indépendante selon l'une quelconque des revendications 1 à 3, **caractérisée en ce que** l'ouverture d'engagement (11) présente des butées (12) contre lesquelles s'applique le levier de direction (4) en cas de charges dues à une mauvaise utilisation.

5. Suspension de roue indépendante selon la revendication 4, **caractérisée en ce que** le levier de direction (4) présente des contre-butées (13) dans la région des butées (12).

6. Suspension de roue indépendante selon l'une quelconque des revendications 4 ou 5, **caractérisée en ce que** les butées (12) et/ou les contre-butées (13) sont en plastique ou portent un élément en plastique.

7. Suspension de roue indépendante selon l'une quelconque des revendications 1 à 6, **caractérisée en ce que** le support de roue (3) et le levier de direction (4) sont fabriqués d'une seule pièce, ou en ce que le support de roue (3) et le levier de direction (4) sont réalisés sous forme de composants séparés et sont assemblés.

8. Suspension de roue indépendante selon l'une quelconque des revendications 1 à 7, **caractérisée en ce que** le levier de direction (4) est connecté par le biais d'une articulation à rotule (14) à la barre d'accouplement (6).

9. Suspension de roue indépendante selon l'une quelconque des revendications 1 à 8, **caractérisée en ce qu'**une distance entre les deux bras (9, 10) du support de roue (3) est au moins aussi grande qu'une distance d'un palier d'axe (5) à une extrémité inférieure du support de roue (3).
